# FASCICULE DE BREVET EUROPEEN

(11) **EP 1 116 940 B1**
(45) Date de publication et mention de la délivrance du brevet: **05.03.2008**
(21) Numéro de dépôt: 00420267.7
(22) Date de dépôt: 20.12.2000
(51) Int. Cl.: G01F 11/26

(54) **Distributeur-doseur pour produits pulvérulents et analogues**
Dosiervorrichtung für pulverförmige Produkte
Dosing device for powdery products

(30) Priorité: 10.01.2000 FR 0000245
(43) Date de publication de la demande: 18.07.2001
(73) Titulaire: ROVIP, 01250 Chavannes sur Suran (FR)
(72) Inventeur: Vimont, Christian, 01370 Treffort (FR)
(74) Mandataire: Bratel, Gérard

(56) Documents cités:
- EP-A- 0 163 109
- EP-A- 0 446 805
- WO-A-00/37897
- DE-C- 19 651 754
- DE-U- 29 723 566
- US-A- 5 246 148

## Description

La présente invention concerne un distributeur-doseur pour produits pulvérulents et analogues. Cette invention s'applique plus particulièrement, mais non exclusivement, à la distribution et au dosage de produits pharmaceutiques sous forme de micro-billes ou micro-granules.

La prescription de médicaments, de type classique ou homéopathiques, impose la prise de doses précises de ces médicaments, à des intervalles de temps définis, les doses pouvant varier selon la prescription médicale et selon le poids du patient, notamment avec distinction des doses pour « enfants » et des doses pour « adultes ».

Pour faciliter la prise de tels médicaments, on a déjà proposé des dispositifs de distribution et de dosage, généralement associés à un récipient contenant une quantité plus ou moins importante du produit concerné, et conçus pour isoler une dose prédéfinie de ce produit avant de la verser.

Dans le cas de pilules classiques, ou de granules homéopathiques, qui sont des produits unitaires de dimensions bien définies et mesurables, les dispositifs de distribution connus sont conçus soit pour délivrer ces produits un à un, soit pour distribuer, à chaque utilisation, un nombre entier précis d'unités de ces produits.

De tels dispositifs ne conviennent pas dans le cas de produits pharmaceutiques ou autres se présentant comme une poudre plus ou moins fine. En effet, dans ce dernier cas, il convient d'isoler un volume précis de produit pulvérulent (supposé correspondre à un poids donné ou à une quantité prédéfinie de principe actif du médicament), puis de verser ce volume de produit, sans risque de perte d'une fraction de ce volume de produit.

Diverses propositions de distributeurs-doseurs pour produits pulvérulents ont été déjà faites. A cet égard, peuvent être cités à titre d'exemples les brevets français N° 2 550 168 et N° 2 755 431, et les demandes de brevets internationales N° WO 86/02997, N° WO 88/07483 et N° WO 98/12128.

D'une façon générale, ces dispositifs connus possèdent les inconvénients suivants :
- Ils sont habituellement intégrés à des récipients, notamment de forme cylindrique, contenant le produit à distribuer, ce qui impose des contraintes dimensionnelles sans rapport direct avec les doses à distribuer, ainsi qu'un principe de fonctionnement purement rotatif ;
- La plupart de ces dispositifs ne permettent pas d'ajuster ou de sélectionner les doses distribuées ;
- Certains dispositifs connus permettent un ajustement de la dose distribuée (cas du brevet français précité N° 2 550 168 et de la demande de brevet internationale précitée N° WO 98/12128), mais leurs moyens de réglage sont d'une structure complexe, et il n'y est pas garanti que le réglage effectué se maintienne dans le temps.

La présente invention vise à éviter l'ensemble de ces inconvénients, en fournissant un distributeur-doseur pour produits pulvérulents et analogues qui soit d'une structure simple et d'une utilisation aisée, et qui permette un réglage de la dose de produit à distribuer en garantissant la fixité de cette dose, le dispositif étant indéréglable, et ce dispositif étant extérieur à tout récipient de sorte que son dimensionnement peut être défini essentiellement en fonction des doses à distribuer, et de manière à garantir la constance et la précision de ces doses.

A cet effet, l'invention a pour objet un distributeur-doseur pour produits pulvérulents et analogues, qui se compose essentiellement, en combinaison :
- d'un support comportant une embase adaptable sur le sommet d'un récipient contenant un produit pulvérulent ou analogue à distribuer, et un corps cylindrique creux surmontant l'embase, le corps cylindrique étant ouvert à son sommet mais fermé à sa base par une paroi dans laquelle est ménagée au moins une ouverture inférieure, le corps cylindrique comportant vers son fond au moins une ouverture latérale prolongée, radialement vers l'extérieur, par un bec verseur ;
- d'une chambre de dosage de forme cylindrique évidée, ouverte à sa partie supérieure et pourvue à sa base d'un fond dans lequel est ménagée au moins une ouverture, la paroi latérale de la chambre de dosage présentant vers sa base une ouverture latérale et cette chambre de dosage étant montée rotative dans le corps cylindrique du support entre une première position angulaire, dans laquelle la ou les ouvertures de son fond viennent en correspondance avec la ou les ouvertures inférieures du support, et une deuxième position angulaire, dans laquelle l'ouverture latérale de ladite chambre de dosage vient en correspondance avec l'ouverture latérale du corps cylindrique du support, des moyens de manoeuvre étant prévus pour faire tourner la chambre de dosage entre les deux positions angulaires précitées ;
- de moyens de calibrage servant à délimiter, dans ladite chambre de dosage, une cavité de volume prédéfini, correspondant à une dose à distribuer.

De préférence, les moyens de calibrage servant à délimiter dans la chambre de dosage une cavité de volume prédéfini, correspondant à une dose à distribuer, sont constitués par un piston calibré de hauteur prédéterminée inférieure à la hauteur de la chambre de dosage, le piston étant introduit et retenu dans ladite chambre de dosage de manière à délimiter, entre le fond de cette chambre et la base dudit piston, une cavité cylindrique de volume correspondant à la dose à distribuer.

En variante, le piston calibré peut être supprimé, les moyens de calibrage étant directement intégrés dans la chambre de dosage, par exemple sous la forme d'une paroi située à hauteur appropriée.

Ainsi, le distributeur-doseur objet de l'invention possède, dans son mode de réalisation préférentiel, le mode de fonctionnement suivant :
- la dose désirée est sélectionnée en mettant en place le piston calibré correspondant dans la chambre de dosage ;
- l'ensemble constitué du support, de la chambre de dosage et du support est monté sur le récipient rempli du produit pulvérulent à distribuer ;
- ce récipient, équipé du distributeur-doseur, est retourné de manière à laisser remplir la chambre de dosage, du moins la cavité délimitée dans cette chambre par le piston, avec le produit pulvérulent s'écoulant par gravité au travers des ouvertures du fond de ladite chambre d'une part, et du support d'autre part, mises en coïncidence ;
- la chambre de dosage est tournée relativement au support, et le récipient est de nouveau retourné, de telle sorte que la dose de produit précédemment isolée peut sortir par le bec verseur, en traversant les ouvertures latérales du support et de la chambre de dosage, mises en coïncidence.

Dans une forme de réalisation préférée de l'invention, l'embase du support possède une forme circulaire, et est pourvue, à sa périphérie, de moyens pour son adaptation, notamment par clippage ou vissage, sur le sommet du récipient.

Avantageusement, pour garantir la précision des quantités de produit pulvérulent dosées, la section ou le diamètre du corps cylindrique du support, donc aussi la section ou le diamètre de la chambre de dosage et du piston, est sensiblement inférieur à la section ou au diamètre de l'embase de ce support.

Selon un mode de réalisation particulier, le support comporte deux ouvertures inférieures en forme de secteurs de cercle diamétralement opposés, le fond de la chambre de dosage comportant lui aussi deux ouvertures en forme de secteurs de cercle diamétralement opposés.

De préférence, le bec verseur du support est à fond incliné et s'étend, radialement, jusqu'au-delà du bord extérieur de l'embase de ce support.

Les moyens de manoeuvre prévus pour faire tourner la chambre de dosage entre les deux positions angulaires précitées, peuvent être constitués par une collerette moletée, prévue au sommet de ladite chambre. D'autres moyens sont avantageusement prévus pour l'indexage de la chambre de dosage, relativement au support, dans les deux positions angulaires précitées.

La chambre de dosage peut encore présenter des marquages lisibles de l'extérieur, et aptes à venir en correspondance avec un repère ou une « fenêtre » du support, de manière à identifier et distinguer les deux positions angulaires précitées.

L'utilisation du distributeur-doseur est rendue encore plus pratique et sûre en réalisant le support et la chambre de dosage en matière transparente, ou du moins avec des « fenêtres » transparentes, permettant de vérifier le remplissage puis le vidage de la cavité délimitée entre le fond de la chambre de dosage et la base du piston.

Quant au piston calibré, celui-ci possède de préférence, à son sommet, une conformation coopérant avec une conformation correspondante prévue au sommet de la chambre de dosage, pour maintenir ce piston dans une position axiale prédéfinie par rapport à ladite chambre de dosage, et assurer ainsi la fixité de la dose distribuée.

Le piston comporte encore avantageusement, à son sommet, une patte saillante sur laquelle est inscrite la valeur de la dose correspondante, valeur qui reste ainsi lisible même lorsque le piston est introduit dans la chambre de dosage.

Le piston calibré, décrit jusqu'ici comme un composant unique, appartient de préférence à une série de pistons de même section ou diamètre, mais de hauteurs progressives, cette série de pistons correspondant à une gamme de doses prédéfinies. Tous ces pistons peuvent notamment être réunis initialement en une « grappe » de pistons, de laquelle l'utilisateur détache le piston correspondant à la dose voulue.

Dans l'ensemble, le distributeur-doseur pour produits pulvérulents et analogues, objet de l'invention, possède les avantages suivants :
- Ce distributeur-doseur est d'une fabrication industrielle simple et économique, ses composants étant peu nombreux, facilement réalisables par moulage et faciles à assembler les uns aux autres ;
- Conçu comme un accessoire indépendant du récipient contenant le produit à distribuer, mais s'adaptant sur ce récipient, le distributeur-doseur selon l'invention peut être dimensionné essentiellement en fonction des doses à distribuer, notamment avec une chambre de dosage et un piston de diamètre relativement petit, de l'ordre du centimètre pour une dose minimum de 0,3 millilitre, ceci garantissant la précision de dosage souhaitable (en effet, plus la section de la chambre de dosage est faible, plus petit sera l'écart de volume pour une incertitude donnée sur la hauteur ou la position du piston) ;
- La valeur de la dose distribuée est très facilement sélectionnable, par le choix initial ou l'échange du piston calibré mis en place dans la chambre de dosage ;
- Une fois le « bon » piston mis en place, le distributeur-doseur devient indéréglable, ce qui assure la fixité, dans le temps, des doses successivement distribuées.
- Le distributeur-doseur est d'une utilisation simple, et facilement manipulable tant par un droitier que par un gaucher, par des gestes simples et sans efforts importants.
- L'utilisation du distributeur-doseur est encore facilitée par la visibilité du produit, en cas de réalisation transparente, celle-ci permettant aussi de vérifier la propreté du système de dosage ;
- Grâce à la configuration du bec verseur, l'utilisation de ce distributeur-doseur s'effectue sans risque de verser le produit « à côté» et de perdre une fraction de ce produit, ce qui contribue à une utilisation propre, aisée et garantissant le versement effectif de la dose sélectionnée ;
- Enfin, quoique non intégré à un récipient, le distributeur-doseur objet de l'invention peut être facilement rangé dans un emballage regroupant le récipient et ce distributeur-doseur.

Compte tenu de tous ces avantages, le distributeur-doseur objet de l'invention s'avère particulièrement adapté à la distribution de doses de produits pharmaceutiques sous forme de micro-billes ou micro-granules.

De toute façon, l'invention sera mieux comprise à l'aide de la description qui suit, en référence au dessin schématique annexé représentant, à titre d'exemple, une forme d'exécution de ce distributeur-doseur pour produits pulvérulents et analogues :
Figure 1 est une vue d'ensemble, en perspective éclatée, d'un distributeur-doseur conforme à la présente invention, les composants de celui-ci étant vus par dessus ;
Figure 2 est une autre vue d'ensemble, en perspective éclatée, de ce distributeur-doseur, les composants de celui-ci étant vus par dessous ;
Figure 3 est une vue d'ensemble en perspective du même distributeur-doseur, à l'état assemblé et adapté sur un récipient ;
Figure 4 est une vue d'ensemble en coupe verticale de ce distributeur-doseur adapté sur un récipient ;
Figure 5 représente, en perspective et à échelle agrandie, un détail du distributeur-doseur des figures précédentes ;
Figures 6 et 7 sont des vues partielles en coupe de ce distributeur-doseur, illustrant deux phases successives de son utilisation ;
Figure 8 représente une série de pistons utilisables avec le même distributeur-doseur.

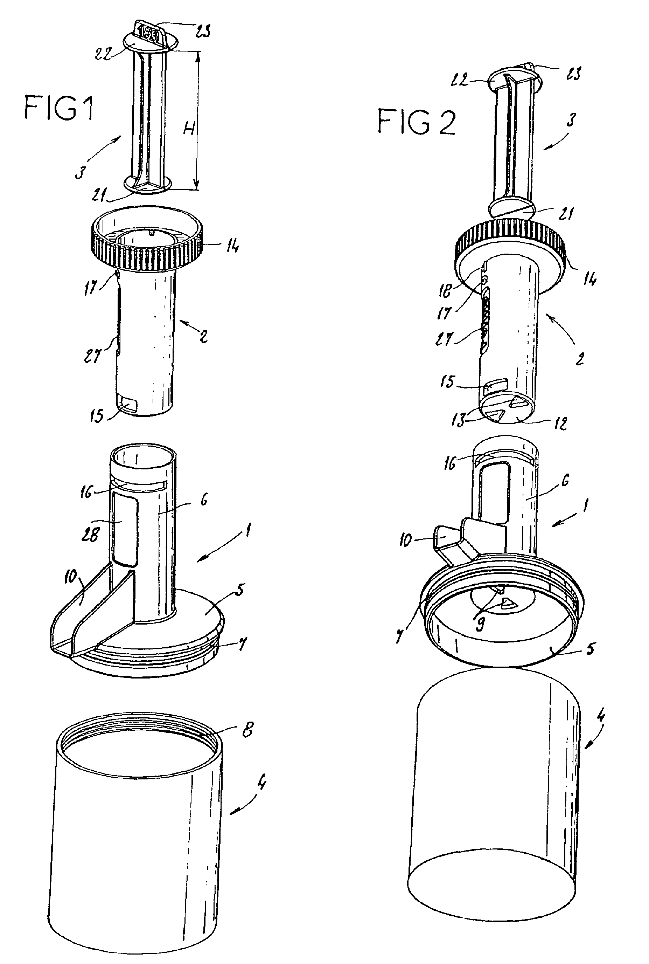

Comme le montrent les figures 1 et 2, le distributeur-doseur objet de l'invention se compose de trois pièces, à savoir un support 1, une chambre de dosage 2 et un piston calibré 3, cet ensemble étant adaptable sur un récipient 4, tel que tube rigide, apte à contenir un produit pulvérulent à distribuer selon des doses précises, de valeur pré-établie.

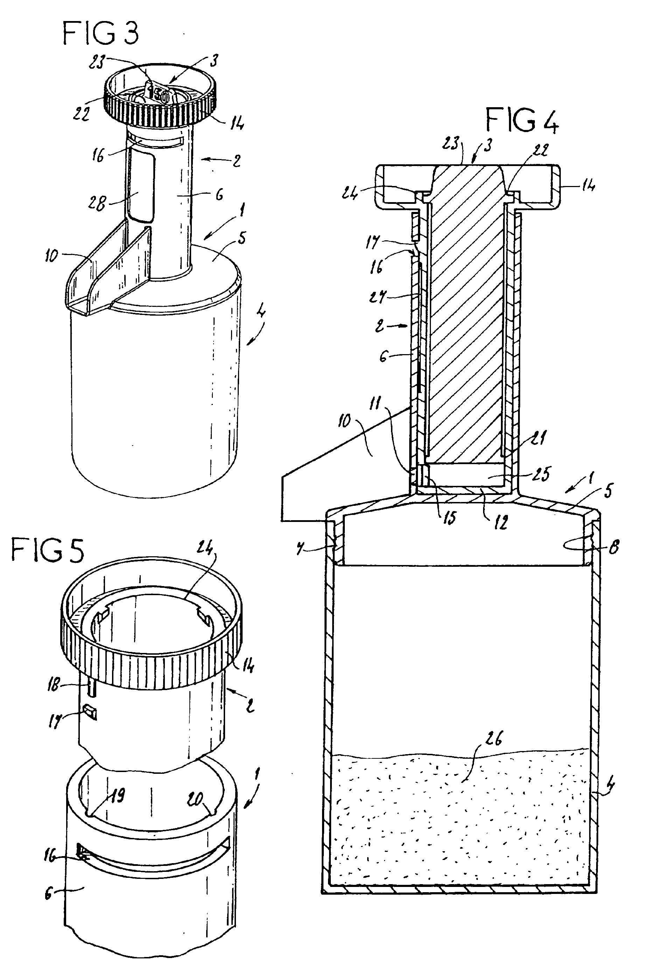

Le support 1 comporte une embase circulaire 5, surmontée coaxialement d'un corps cylindrique creux 6 dont le diamètre est sensiblement plus petit que celui de l'embase 5. Plus particulièrement, le diamètre de l'embase 5 est adapté à celui du récipient 4, et des dispositions sont prévues, comme indiqué en 7 et 8, pour l'adaptation étanche par clippage du support 1, par son embase 5, sur le sommet du récipient 4 (voir aussi figures 3 et 4).

Le corps cylindrique 6 du support 1 est ouvert à son sommet. A sa base, ce corps cylindrique 6 est fermé pour l'essentiel par une paroi horizontale, mais deux ouvertures inférieures 9, en forme de secteurs de cercle diamétralement opposés, sont ménagées dans cette paroi et font communiquer le volume intérieur dudit corps 6 avec le dessous de l'embase 5.

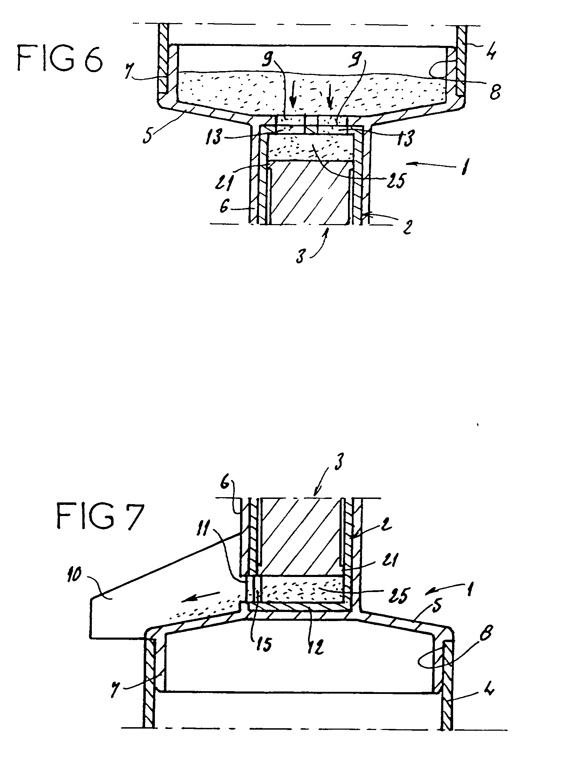

Le support 1 comporte encore un bec verseur 10, prévu juste au-dessus de son embase 5, au niveau de la partie inférieure du corps cylindrique 6. Le bec verseur 10 s'étend, radialement, jusqu'au-delà du bord extérieur circulaire de l'embase 5. La paroi cylindrique du corps 6 présente, vers sa base, une ouverture latérale 11 rectangulaire (voir aussi figure 7) faisant communiquer le volume intérieur dudit corps 6 avec l'intérieur du bec verseur 10. Le fond de ce bec verseur 10 est incliné sur l'horizontale.

La chambre de dosage 2 se présente comme une pièce cylindrique évidée. A sa base, cette chambre de dosage 2 possède un fond 12, dans lequel sont ménagées deux ouvertures 13, en forme de secteurs de cercle diamétralement opposés. La chambre de dosage 2 est ouverte à son sommet, lequel se trouve élargi en diamètre pour former une collerette moletée 14. La paroi latérale de ladite chambre de dosage 2 présente, vers sa base, une ouverture 15 rectangulaire.

Le diamètre extérieur de la chambre de dosage 2 correspond au diamètre intérieur du corps cylindrique 6 du support 1, et les hauteurs de ladite chambre de dosage 2 et du corps cylindrique 6 sont sensiblement égales, de telle sorte que la chambre de dosage 2 puisse être montée, de façon rotative, à l'intérieur du corps cylindrique 6 du support 1, les figures 3 et 4 montrant ces deux parties montées l'une dans l'autre.

Pour retenir la chambre de dosage 2 dans le corps cylindrique 6 du support 1, il est prévu, vers le sommet de la paroi latérale dudit corps 6, une fente 16 en arc de cercle, dans laquelle est engagé un ergot 17 formé extérieurement sur la paroi latérale de la chambre de dosage 2, à hauteur correspondante - voir en particulier figure 5. La longueur de la fente 16 détermine l'amplitude de rotation autorisée pour la chambre de dosage 2, relativement au support 1, cette amplitude étant notamment de 90°.

De plus, pour l'indexage de la chambre de dosage 2 dans les deux positions angulaires extrêmes de son mouvement de rotation, celle-ci comporte extérieurement, juste sous sa collerette 14, un petit bossage arrondi 18 pouvant coopérer avec l'un ou l'autre de deux petits évidements 19 et 20 ménagés intérieurement au sommet de la paroi du corps cylindrique 6 du support 1 - voir aussi figure 5.

Le piston 3, par exemple de section cruciforme, possède entre sa base 21 et son sommet 22 une hauteur H prédéterminée, inférieure à la hauteur de la chambre de dosage 2. La base 21 du piston 3 présente la forme d'un disque, dont le diamètre correspond au diamètre intérieur de la chambre de dosage 2. Le sommet 22 du piston 3 possède également la forme d'un disque, surmonté d'une patte verticale 23 sur laquelle est inscrite la valeur de la dose, correspondant à ce piston 3.

Pour l'utilisation du distributeur-doseur, le piston 3 (choisi en fonction de la dose à distribuer) est introduit à l'intérieur de la chambre de dosage 2, le disque supérieur 22 de ce piston 3 étant retenu par coopération avec une conformation annulaire 24 correspondante, prévue au sommet de la chambre de dosage 2 - voir en particulier la figure 4. Une cavité cylindrique 25, de volume bien défini, est ainsi délimitée dans la chambre de dosage 2, entre le fond 12 de cette chambre 2 et le disque inférieur 21 du piston 3.

Le distributeur-doseur précédemment décrit s'utilise de la manière suivante :

Ce distributeur-doseur, c'est-à-dire l'ensemble composé du support 1, de la chambre de dosage 2 et du piston calibré 3 assemblés entre eux, est monté sur le tube ou autre récipient 4, contenant une quantité quelconque de produit pulvérulent 26 à distribuer de façon dosée (voir figure 4). Le distributeur-doseur est supposé équipé d'un piston calibré 3 correspondant à la dose désirée.

Grâce à sa collerette moletée 14, la chambre de dosage 2 est amenée, relativement au support 1, dans une positon angulaire extrême telle que les deux ouvertures 13 du fond 12 de ladite chambre de dosage 2 viennent en coïncidence avec les deux ouvertures 9 du support 1. Dans cette position relative, l'ouverture latérale 15 de la chambre de dosage 2 se trouve décalée angulairement par rapport à l'ouverture latérale 11 du corps cylindrique 6 du support 1.

L'ensemble constitué du distributeur-doseur et du récipient 4 est alors retourné, de manière à laisser se remplir la cavité 25 de la chambre de dosage 2, le produit pulvérulent 26 s'écoulant par gravité vers cette cavité 25, depuis le récipient 4, au travers des ouvertures 9 et 13 mises en coïncidence - voir figure 6.

On notera que, pour permettre un contrôle visuel de cette phase d'utilisation, le support 1 et la chambre de dosage 2 sont avantageusement réalisés en matière transparente, ou du moins avec des « fenêtres » transparentes, permettant de vérifier le remplissage effectif et complet de la cavité 25.

Ensuite, l'ensemble est de nouveau retourné pour revenir dans son orientation initiale, et la chambre de dosage 2 est tournée à l'aide de sa collerette moletée 14, pour être amenée dans son autre position angulaire extrême. Dans cette position, les deux ouvertures 13 du fond 12 de la chambre de dosage 2 ne coïncident plus avec les ouvertures 9 du support 1 ; par contre, l'ouverture latérale 15 de la chambre de dosage 12 est amenée en coïncidence avec l'ouverture latérale 11 du corps cylindrique 6 du support 1. Ainsi, comme le montre la figure 7, la dose de produit pulvérulent, précédemment isolée dans la cavité 25, s'écoule par gravité dans le bec verseur 10, et peut ainsi tomber dans un réceptacle, ou sur un aliment, placé sur le côté du récipient 4.

A la prochaine utilisation, la répétition des mêmes opérations permet la distribution d'une nouvelle dose de produit pulvérulent 26, identique à la précédente.

Pour faciliter l'utilisation du distributeur-doseur, la chambre de dosage 2 présente avantageusement, sur sa paroi latérale cylindrique, des marquages explicites 27 tels que « REMPLIR » et « VIDER », lisibles depuis l'extérieur par transparence au travers d'une « fenêtre » 28 ménagée dans la paroi du corps cylindrique 6 du support 1 - voir notamment les figures 1 et 2.

Comme on le comprend aisément, plus la hauteur H du piston calibré 3 est faible, plus la hauteur de la cavité 25 est grande et, en conséquence, plus la dose de produit isolée dans cette cavité 25 à chaque utilisation est importante. La hauteur H du piston 3 détermine ainsi directement la dose distribuée.

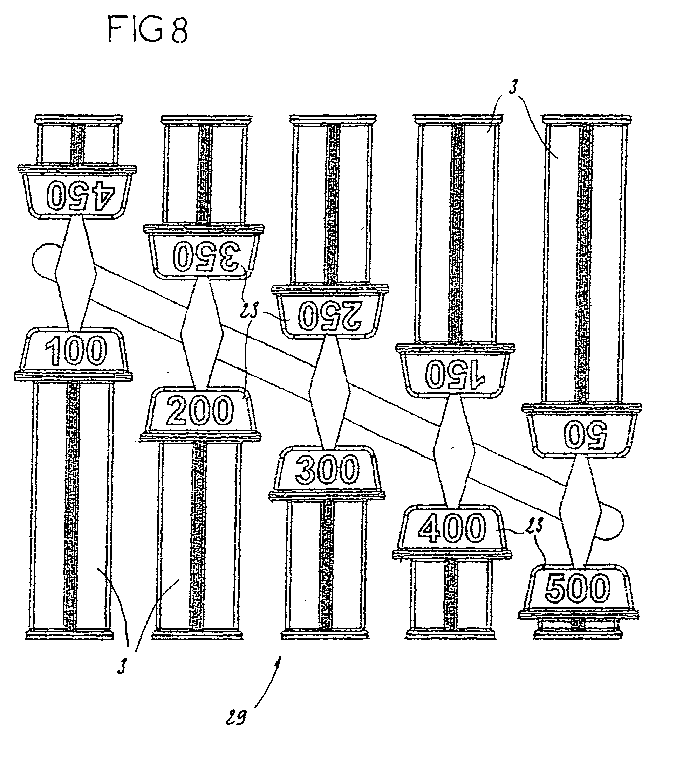

Afin de disposer d'une gamme de doses prédéterminées, il suffit de prévoir une série de pistons calibrés 3 tous adaptables sur la même chambre de dosage 2, mais qui diffèrent les uns des autres par leur hauteur H. Comme montré sur la figure 8, une telle série de pistons calibrés 3 peut être réalisée notamment par moulage, en une seule opération, d'une « grappe » 29 de pistons, présentant des hauteurs progressives. Il suffit alors à l'utilisateur de détacher de cette grappe 29, le piston 3 correspondant à la dose voulue (identifiée sur la patte 23 de ce piston), et de mettre en place, dans la chambre de dosage 2, le piston 3 sélectionné.

Il est encore possible de prévoir deux séries de pistons, de hauteurs correspondantes mais de diamètres distincts, pour obtenir facilement deux gammes de doses, les pistons de la série de plus grand diamètre étant destinés par exemple à des doses pour « adultes », tandis que les pistons de la série de plus petit diamètre sont destinés à des doses pour « enfants ». En effet, comme on le comprend aisément, une variation de hauteur donnée d'un piston correspond à une variation plus ou moins importante de la dose, selon le diamètre de ce piston (et de la chambre de dosage).

L'on ne s'éloignerait pas du cadre de l'invention, telle que définie par les revendications annexées, par des modifications de détail des formes des divers composants (support, chambre de dosage, piston calibré), ou par l'intégration de la fonction de calibrage de la dose dans la chambre de dosage (le piston n'étant plus une pièce distincte), ou par l'adaptation du même distributeur-doseur sur tout type de récipient, rigide ou semi-rigide ou souple, par exemple sur un flacon, ou encore par l'utilisation de ce distributeur-doseur avec tous produits pulvérulents et analogues, qu'il s'agisse de médicaments, de produits alimentaires, de produits d' entretien ou autres.

## Revendications

1. Distributeur-doseur pour produits pulvérulents et analogues, **caractérisé en ce qu'**il se compose, en combinaison :
- d'un support (1) comportant une embase (5) adaptable sur le sommet d'un récipient (4) contenant un produit pulvérulent (26) ou analogue à distribuer, et un corps cylindrique creux (6) surmontant l'embase (5), le corps cylindrique (6) étant ouvert à son sommet mais fermé à sa base par une paroi dans laquelle est ménagée au moins une ouverture inférieure (9), le corps cylindrique (6) comportant vers son fond au moins une ouverture latérale (11) prolongée, radialement vers l'extérieur, par un bec verseur (10);
- d'une chambre de dosage (2) de forme cylindrique évidée, ouverte à sa partie supérieure et pourvue à sa base d'un fond (12) dans lequel est ménagée au moins une ouverture (13), la paroi latérale de la chambre de dosage (2) présentant vers sa base une ouverture latérale (15) et cette chambre de dosage (2) étant montée rotative dans le corps cylindrique (6) du support (1) entre une première position angulaire, dans laquelle la ou les ouvertures (13) de son fond (12) viennent en correspondance avec la ou les ouvertures inférieures (9) du support (1), et une deuxième position angulaire, dans laquelle l'ouverture latérale (15) de ladite chambre de dosage (2) vient en correspondance avec l'ouverture latérale (11) du corps cylindrique (6) du support (1), des moyens de manoeuvre (14) étant prévus pour faire tourner la chambre de dosage (2) entre les deux positions angulaires précitées ;
- de moyens de calibrage (3) servant à délimiter, dans ladite chambre de dosage (2), une cavité (25) de volume prédéfini, correspondant à une dose à distribuer.

2. Distributeur-doseur selon la revendication 1, **caractérisé en ce que** lesdits moyens de calibrage, servant à délimiter dans la chambre de dosage (2) une cavité de volume prédéfini, correspondant à une dose à distribuer, sont constitués par un piston calibré (3) de hauteur (H) prédéterminée inférieure à la hauteur de la chambre de dosage (2), le piston (3) étant introduit et retenu dans ladite chambre de dosage (2) de manière à délimiter, entre le fond (12) de cette chambre (2) et la base (21) dudit piston (3), une cavité cylindrique (25) de volume correspondant à la dose à distribuer.

3. Distributeur-doseur selon la revendication 1, **caractérisé en ce que** lesdits moyens de calibrage sont directement intégrés dans la chambre de dosage (2).

4. Distributeur-doseur selon l'une quelconque des revendications 1 à 3, **caractérisé en ce que** l'embase (5) du support (1) possède une forme circulaire, et est pourvue, à sa périphérie, de moyens (7) pour son adaptation, notamment par clippage ou vissage, sur le sommet du récipient (4).

5. Distributeur-doseur selon l'une quelconque des revendications 1 ou 4, **caractérisé en ce que** la section ou le diamètre du corps cylindrique (6) du support (1) est sensiblement inférieur à la section ou au diamètre de l'embase (5) de ce support (1).

6. Distributeur-doseur selon l'une quelconque des revendications 1 à 5, **caractérisé en ce que** le support (1) comporte deux ouvertures inférieures (9) en forme de secteurs de cercle diamétralement opposés, le fond (12) de la chambre de dosage (2) comportant lui aussi deux ouvertures (13) en forme de secteurs de cercle diamétralement opposés.

7. Distributeur-doseur selon l'une quelconque des revendications 1 à 6, **caractérisé en ce que** le bec verseur (10) du support (1) est à fond incliné et s'étend, radialement, jusqu'au-delà du bord extérieur de l'embase (5) de ce support (1).

8. Distributeur-doseur selon l'une quelconque des revendications 1 à 7, **caractérisé en ce que** des moyens (18, 19, 20) sont prévus pour l'indexage de la chambre de dosage (2), relativement au support (1), dans les deux positions angulaires précitées.

9. Distributeur-doseur selon l'une quelconque des revendications 1 à 8, **caractérisé en ce que** les moyens de manoeuvre, prévus pour faire tourner la chambre de dosage (2) entre les deux positions angulaires précitées, sont constitués par une collerette moletée (14), prévue au sommet de ladite chambre de dosage (2).

10. Distributeur-doseur selon l'une quelconque des revendications 1 à 9, **caractérisé en ce que** la chambre de dosage (2) présente des marquages lisibles de l'extérieur, et aptes à venir en correspondance avec un repère ou une fenêtre (28) du support (1), de manière à identifier et distinguer les deux positions angulaires précitées.

11. Distributeur-doseur selon l'une quelconque des revendications 1 à 10, **caractérisé en ce que** le support (1) et la chambre de dosage (2) sont réalisés en matière transparente, ou du moins avec des « fenêtres » transparentes, permettant de vérifier le remplissage puis le vidage de la cavité (25) délimitée entre le fond (12) de la chambre de dosage (2) et la base (21) du piston (3).

12. Distributeur-doseur selon la revendication 2 et l'une quelconque des revendications 4 à 11, **caractérisé en ce que** le piston calibré (3) possède, à son sommet, une conformation (22) coopérant avec une conformation correspondante (24) prévue au sommet de la chambre de dosage (2), pour maintenir ce piston (3) dans une position axiale prédéfinie par rapport à ladite chambre de dosage (2).

13. Distributeur-doseur selon la revendication 2 et l'une quelconque des revendications 4 à 11, **caractérisé en ce que** le piston calibré (3) comporte, à son sommet, une patte saillante (23) sur laquelle est inscrite la valeur de la dose correspondante.

14. Distributeur-doseur selon la revendication 2 et l'une quelconque des revendications 4 à 13, **caractérisé en ce que** le piston calibré (3) appartient à une série de pistons de même section ou diamètre, mais de hauteurs (H) progressives, notamment des pistons (3) réunis initialement en une « grappe » (29), de pistons, cette série de pistons (3) correspondant à une gamme de doses prédéfinies.

15. Utilisation du distributeur-doseur selon l'une quelconque des revendications 1 à 14 pour la distribution de doses de produits pharmaceutiques sous forme de micro-billes ou micro-granules.

## Claims

1. Dispenser for products in powder form and the like, **characterized in that** it is comprised, in combination:
- of a support (1) having a base (5) fittable onto the top of a receptacle (4) containing a product (26) in powder form or the like to be dispensed, and a hollow cylindrical body (6) mounted on base (5), the cylindrical body (6) being open at its top but closed at its bottom by a wall in which at least one lower opening (9) is provided, the cylindrical body (6) having at its bottom at least one lateral opening (11) extended radially outward by a pour spout (10);
- of a dispensing chamber (2) of hollow cylindrical shape, open at its upper part and provided at its base with a bottom (12) in which at least one opening (13) is provided, with the base of the side wall of the dispensing chamber (2) having a lateral opening (15) and this dispensing chamber (20) being mounted in cylindrical body (6) of support (1) so that it can rotate between a first angular position in which the opening or openings (13) in its bottom (12) coincide with the lower opening or openings (9) in support (1), and a second angular position in which the lateral opening (15) of said dispensing chamber (2) coincides with the lateral opening (11) in the cylindrical body (6) of support (1), operating means (14) being provided to rotate the dispensing chamber (2) between the two aforesaid angular positions;
- of calibration means (3) serving to delimit a cavity (25) of predefined volume corresponding to one dose for dispensing, inside said dispensing chamber (2).

2. Dispenser according to claim 1, **characterized in that** said calibration means, serving to delimit a cavity of predefined volume in dispensing chamber (2), corresponding to a dose for dispensing, are comprised of a calibrated plunger (3) with a predetermined height (H) that is less than the height of dispensing chamber (2), the plunger (3) being inserted into and held in said dispensing chamber (2) in order to delimit, between the bottom (12) of this chamber (2) and the base (21) of said plunger (3), a cylindrical cavity (25) whose volume corresponds to the dose to be dispensed.

3. Dispenser according to claim 1, **characterized in that** said calibration means are directly built into the dispensing chamber (2).

4. Dispenser according to any one of the claims 1 to 3, **characterized in that** the base (5) of support (1) has a circular shape and at its periphery is provided with means (7) for fitting if, particularly snapping or screwing if, onto the top of receptacle (4).

5. Dispenser according to either of claims 1 or 4, **characterized in that** the cross section or diameter of the cylindrical body (6) of support (1) is substantial less than the cross section or diameter of base (5) of this support (1).

6. Dispenser according to any one of claims 1 to 5, **characterized in that** the support (1) has two lower openings (9) in the shape of sectors of a circle and diametrically opposite each other, with the bottom (12) of dispensing chamber (2) a having two openings (13) in the shape of sectors of a circle and diametrically opposite each other.

7. Dispenser according to any one of claims 1 to 6, **characterized in that** the pour spout (10) of support (1) has a tilted bottom and extends radially beyond the outer edge of base (5) of this support (1).

8. Dispenser according to any one of claims 1 to 7, **characterized in that** means (18, 19, 20) are provided to index the dispensing chamber (2) relative to support (1) in the two aforesaid angular positions.

9. Dispenser according to any one of claims 1 to 8, **characterized in that** the operating means provided for rotating the dispensing chamber (2) between the two aforesaid angular positions are comprised of a knurled wheel (14) provided at the top of said dispensing chamber (2).

10. Dispenser according to any one of claims 1 to 9, **characterized in that** the dispensing chamber (2) has labels readable from fie outside and able to come into correspondence with a mark or window (28) in support (1) in order to identify and distinguish the two aforesaid angular positions.

11. Dispenser according to any one of claims 1 to 10, **characterized in that** the support (1) and dispensing chamber ('2) are made of a transparent material, or at least with transparent "windows" enabling the degree of filling then emptying of the cavity (25) delimited between bottom (12) of the dispensing chamber (2) and the base (21) of plunger (3) to be checked.

12. Dispenser according to claim 2 and any one of claims 4 to 11, **characterized in that** the calibrated plunger (3) has at its top a shape (22) cooperating with a corresponding shape (24) provided in the top of dispensing chamber (2) to keep this plunger (3) in a predefined axial position relative to said dispensing chamber (2).

13. Dispenser according to claim 2 and any of claims 4 to 11, **characterized in that** the calibrated plunger (3) has, at its top, a projecting tab (23) on which the value of the corresponding dose is inscribed.

14. Dispenser according to claim 2 and any of the claims 4 to 13, **characterized in that** the calibrated plunger (3) belongs to a series of plungers with the same cross section or diameter, but with graduated heights (H), particularly plungers (3) initially bunched in a "cluster" (29) of plungers, this series of plungers (3) corresponding to a range of predefined doses.

15. Use of the dispenser according to any one of claims 1 to 14 for dispensing doses of pharmaceutical products in the form of microbeads or microgranules.

## Patentansprüche

1. Dosier-Spender für feinpulvrige und analoge Produkte, **dadurch gekennzeichnet, dass** er in Kombination folgende Teile umfasst:
- ein Unterteil (1), das eine Ansatzplatte (5) umfasst, die auf das obere Ende eines Behälters (4) aufgesetzt werden kann, der ein auszugebendes feinpulvriges oder analoges Produkt (26) enthält, sowie einen zylindrischen Hohlkörper (6) umfasst, der aus der Ansatzplatte (5) herausragt, wobei der zylinderförmige Körper (6) an seinem oberen Ende offen ist, aber an seiner Basis durch einen Boden verschlossen ist, in dem mindestens eine untere Öffnung (9) ausgeführt ist, und wobei der zylinderförmige Körper (6) im Bereich seines Bodens mindestens eine seitliche Öffnung (11) hat, die durch einen Schüttschnabel (10) radial nach außen verlängert ist;
- eine zylinderförmige hohle Dosierkammer (2), die an ihrem oberen Teil offen ist und an ihrer Basis mit einem Boden (12) versehen ist, in dem mindestens eine Öffnung (13) ausgeführt ist, wobei die Seitenwand der Dosierkammer (2) im Bereich ihrer Basis eine seitliche Öffnung (15) aufweist und wobei diese Dosierkammer (2) in den zylinderförmigen Körper (6) des Unterteils (1) eingesetzt ist, und zwar drehbar zwischen einer ersten Winkelstellung, in der die oder mehrere Öffnungen (13) ihres Bodens (12) in Übereinstimmung kommen mit der oder mehreren unteren Öffnungen (9) des Unterteils (1), und einer zweiten Winkelstellung, in der die seitliche Öffnung (15) dieser Dosierkammer (2) in Übereinstimmung kommt mit der seitlichen Öffnung (11) des zylinderförmigen Körpers (6) des Unterteils (1), wobei eine Bedienvorrichtung (14) vorgesehen ist, damit die Dosierkammer (2) zwischen den zwei vorgenannten Winkelstellungen gedreht werden kann;
- Mittel (3) zum Kalibrieren, die dazu dienen, in dieser Dosierkammer (2) einen Hohlraum (25) mit vorher definiertem Volumen abzugrenzen, das einer auszugebenden Dosis entspricht.

2. Dosier-Spender nach Anspruch 1, **dadurch gekennzeichnet, dass** diese Mittel zum Kalibrieren, durch die in der Dosierkammer (2) ein Hohlraum mit vorher definiertem Volumen abgegrenzt ist, das einer auszugebenden Dosis entspricht, gebildet sind von einem kalibrierten Kolben (3) mit vorbestimmter Höhe (H), die niedriger ist als die Höhe der Dosierkammer (2), wobei der Kolben (3) in diese Dosierkammer (2) so eingeführt und gehalten wird, dass zwischen dem Boden (12) dieser Kammer (2) und der Basis (21) des Kolbens (3) ein zylinderförmiger Hohlraum (25) mit einem Volumen abgegrenzt ist, das der auszugebenden Dosis entspricht.

3. Dosier-Spender nach Anspruch 1, **dadurch gekennzeichnet, dass** diese Mittel zum Kalibrieren direkt in die Dosierkammer (2) integriert sind.

4. Dosier-Spender nach einem der Ansprüche 1 bis 3, **dadurch gekennzeichnet, dass** die Ansatzplatte (5) des Unterteils (1) kreisförmig ist und an seiner Peripherie mit Mitteln (7) zum Aufsetzen, insbesondere durch Clipverschließen oder Schrauben, auf das obere Ende des Behälters (4) versehen ist.

5. Dosier-Spender nach einem der Ansprüche 1 oder 4, **dadurch gekennzeichnet, dass** der Querschnitt oder der Durchmesser des zylinderförmigen Körpers (6) des Unterteils (1) deutlich kleiner ist als der Querschnitt oder der Durchmesser der Ansatzplatte (5) dieses Unterteils (1).

6. Dosier-Spender nach einem der Ansprüche 1 bis 5, **dadurch gekennzeichnet, dass** das Unterteil (1) zwei untere Öffnungen (9) in Form von diametral entgegengesetzten Kreisausschnitten hat, wobei der Boden (12) der Dosierkammer (2) ebenfalls zwei Öffnungen (13) in Form von diametral entgegengesetzten Kreisausschnitten aufweist.

7. Dosier-Spender nach einem der Ansprüche 1 bis 6, **dadurch gekennzeichnet, dass** der Schüttschnabel (10) des Unterteils (1) einen schrägen Boden hat und sich radial bis über den Außenrand der Ansatzplatte (5) dieses Unterteils (1) hinaus erstreckt.

8. Dosier-Spender nach einem der Ansprüche 1 bis 7, **dadurch gekennzeichnet, dass** Mittel (18, 19, 20) zum Einstellen der Dosierkammer (2) auf die zwei vorgenannten Winkelpositionen, bezogen auf das Unterteil (1), vorgesehen sind.

9. Dosier-Spender nach einem der Ansprüche 1 bis 8, **dadurch gekennzeichnet, dass** die Bedienvorrichtung, die dem Drehen der Dosierkammer (2) zwischen den zwei vorgenannten Winkelpositionen dient, gebildet ist durch einen Rändelflansch (14), der am oberen Ende der Dosierkammer (2) angeordnet ist.

10. Dosier-Spender nach einem der Ansprüche 1 bis 9, **dadurch gekennzeichnet, dass** die Dosierkammer (2) Markierungen aufweist, die von außen lesbar und so ausgelegt sind, dass sie mit einer Markierung oder einem Fenster (28) des Unterteils (1) in Übereinstimmung kommen können, um so die zwei vorgenannten Winkelpositionen zu identifizieren und zu unterscheiden.

11. Dosier-Spender nach einem der Ansprüche 1 bis 10, **dadurch gekennzeichnet, dass** das Unterteil (1) und die Dosierkammer (2) aus durchsichtigem Material hergestellt sind oder zumindest durchsichtige "Fenster" aufweisen, damit das Füllen und dann das Leeren des Hohlraums (25) überprüft werden kann, der zwischen dem Boden (12) der Dosierkammer (2) und der Basis (21) des Kolbens (3) abgegrenzt ist.

12. Dosier-Spender nach Anspruch 2 und einem der Ansprüche 4 bis 11, **dadurch gekennzeichnet, dass** der kalibrierte Kolben (3) an seinem oberen Ende eine Konformation (22) hat, die mit einer entsprechenden Konformation (24) zusammenwirkt, die am oberen Ende der Dosierkammer (2) vorgesehen ist, um diesen Kolben (3) in einer vorher definierten axialen Stellung bezogen auf diese Dosierkammer (2) zu halten.

13. Dosier-Spender nach Anspruch 2 und einem der Ansprüche 4 bis 11, **dadurch gekennzeichnet, dass** der kalibrierte Kolben (3) an seinem oberen Ende eine hervorstehende Lasche (23) hat, auf der die Menge der entprechenden Dosis vermerkt ist.

14. Dosier-Spender nach Anspruch 2 und einem der Ansprüche 4 bis 13, **dadurch gekennzeichnet, dass** der kalibrierte Kolben (3) zu einer Reihe von Kolben mit gleichem Querschnitt oder Durchmesser, aber ansteigender Höhe (H) gehört, insbesondere Kolben (3), die ursprünglich in einer "Traube" (29) von Kolben zusammengefasst sind, wobei diese Reihe von Kolben (3) einem Spektrum mit vorher definierten Dosierungen entspricht.

15. Verwendung des Dosier-Spenders nach einem der Ansprüche 1 bis 14 für die Ausgabe von Dosierungen pharmazeutischer Produkte in Form von Mikrokügelchen oder Mikrogranulaten.
